(19) Europäisches Patentamt
European Patent Office
Office européen des brevets

(11) EP 0 866 106 B1

(12) **EUROPÄISCHE PATENTSCHRIFT**

(45) Veröffentlichungstag und Bekanntmachung des Hinweises auf die Patenterteilung:
**23.08.2000 Patentblatt 2000/34**

(51) Int Cl.7: **C09D 11/02**, C09B 67/00

(21) Anmeldenummer: **98104105.6**

(22) Anmeldetag: **07.03.1998**

(54) **Pigmentkombinationen für Illustrationstiefdruckfarben mit verbesserten rheologischen Eigenschaften**

Pigment combination for gravure inks for illustrations with improved rheological properties

Combination de pigments pour encres d'impression chalcographique pour illustrations avec des propriétés rhéologicales améliorées

(84) Benannte Vertragsstaaten:
**BE DE FR GB IT NL**

(30) Priorität: **17.03.1997 DE 19710977**

(43) Veröffentlichungstag der Anmeldung:
**23.09.1998 Patentblatt 1998/39**

(73) Patentinhaber: **Clariant GmbH**
**65929 Frankfurt am Main (DE)**

(72) Erfinder:
- **Winter, Rainer**
  **61440 Oberursel (DE)**
- **Zidan, Ibrahim**
  **65835 Liederbach (DE)**
- **Ott, Ulrich, Dr.**
  **65719 Hofheim (DE)**
- **Sieber, Alexander, Dr.**
  **65929 Frankfurt (DE)**

(56) Entgegenhaltungen:
**EP-A- 0 651 029**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft die Verwendung von Gelbpigmentkombinationen für Illustrationstiefdruckfarben.

Der Tiefdruck wird in Illustrations- und Verpackungstiefdruck unterteilt. Illustrationstiefdruck wird vorzugsweise für Magazine, Illustrierte, Warenhauskataloge etc. angewendet. Die beiden Druckverfahren stellen u.a. wegen des unterschiedlichen Aufbaus der Druckfarben auch unterschiedliche Anforderungen an die eingesetzten Pigmente.

Illustrationstiefdruckfarben bestehen aus dem Farbmittel, welches in der Regel ein organisches Pigment ist, dem Firnis, welcher meist ein Natur- oder Kunstharz ist, der in einem organischen Lösemittel, meist Toluol oder auch Gemische von Toluol und anderen flüssigen Kohlenwasserstoffen, gelöst ist. Nach Applikation der Druckfarbe auf dem Papier verdunstet das Lösemittel, und das Pigment wird durch den Harzanteil des Firnisses fixiert.

Wegen der üblicherweise hohen Druckgeschwindigkeiten beim Illustrationstiefdruck müssen die Druckfarben möglichst dünnflüssig sein. Die gegenwärtig hauptsächlich verwendeten Gelbpigmente für Illustrationstiefdruckfarben sind aminpräparierte Diarylgelbpigmente, insbesondere C.I. Pigment Yellow 12 (C.I. No. 21 090), wie beschrieben z. B. in US-A-4,462,833 oder in EP-A-0 057 880. C.I. Pigment Yellow 12 enthält im Molekül eine Dichlorbenzidin-Einheit, was unter ökologischen Gesichtspunkten zunehmend als problematisch diskutiert wird. Bei den zur Zeit verfügbaren chlor- und dichlorbenzidinfreien Gelbpigmenten zeigen sich beim Einsatz in Illustrationstiefdruckfarben folgende Nachteile: schlechte Benetzbarkeit und Dispergierbarkeit mit den üblichen Kunst- oder Naturharzen; schlechte rheologische Eigenschaften, d.h. die Farben sind dickflüssig und schwer verdruckbar; die coloristischen Eigenschaften wie Farbstärke, Glanz und Transparenz sind nicht ausreichend.
Eine Verdünnung mit Toluol, um die Viskosität zu senken, scheidet oftmals aus, da die Farben mit steigendem Toluolgehalt flockulieren und deshalb nicht verdruckt werden können.

Es bestand daher die Aufgabe, gelbe Illustrationstiefdruckfarben bereitzustellen, die frei von aminpräparierten P.Y. 12 Pigmenten und vorzugsweise frei von chlor- und dichlorbenzidinhaltigen Pigmenten sind und gleichermaßen die vorstehend beschriebenen Nachteile überwinden.

Diese Aufgabe wurde überraschenderweise durch eine Kombination von C.I. Pigment Yellow 139 mit einem oder mehreren, vorzugsweise chlorfreien organischen Gelbpigmenten gelöst.

Gegenstand der vorliegenden Erfindung ist daher eine Illustrationstiefdruckfarbe, die gekennzeichnet ist durch einen Gehalt an C.I. Pigment Yellow 139 der Formel (I)

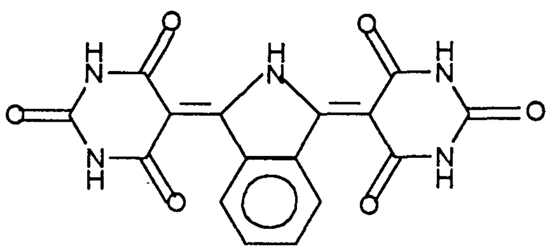

(I)

und einem oder mehreren, beispielsweise 1, 2 oder 3, vorzugsweise chlorfreien, organischen Gelbpigmenten.

C.I. Pigment Yellow 139 ist an sich bekannt und beispielsweise in DE-A-3 022 839 beschrieben. Das erfindungsgemäß eingesetzte weitere, vorzugsweise chlorfreie organische Gelbpigment ist allein in der Regel nicht für den Illustrationstiefdruck verwendbar, da es ein oder mehrere der vorstehend beschriebenen Nachteile aufweist. C.I. Pigment Yellow 139 allein hat den Nachteil eines zu rotstichigen Farbtones. Überraschenderweise wirkt aber P.Y. 139 in Kombination mit anderen vorzugsweise chlorfreien organischen Gelbpigmenten stabilisierend und verbessert die drucktechnischen Eigenschaften. Die für die rheologischen Eigenschaften wichtige Toluolverdünnbarkeit wird deutlich gesenkt und kann auf ein praxisübliches Niveau eingestellt werden.

Die besagten vorzugsweise chlorfreien organischen Gelbpigmente gehören zur Klasse der Monoazo-, Disazo- und Isoindolin-Pigmente, sind jedoch nicht auf diese beschränkt. Besonders bevorzugt sind Pigmente der Formel (II)

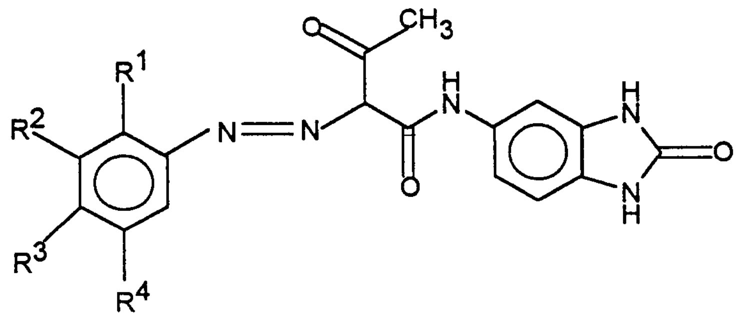

(II)

worin

$R^1$ Wasserstoff, $CF_3$, $OCH_3$, COOH oder $COO(C_1\text{-}C_4)$alkyl;
$R^2$ Wasserstoff oder $COO(C_1\text{-}C_4)$alkyl;
$R^3$ Wasserstoff oder Nitro und
$R^4$ Wasserstoff oder $COO(C_1\text{-}C_4)$alkyl bedeuten, ist,

oder Pigmente der Formel (III)

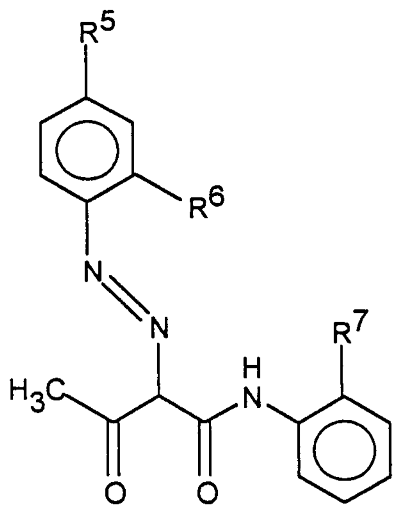

(III)

worin

$R^5$ Wasserstoff, Methyl oder Nitro;
$R^6$ Nitro, Methyl oder Methoxy; und
$R^7$ Wasserstoff oder Methoxy bedeuten, ist.

Beispiele für die vorzugsweise chlorfreien organischen Gelbpigmente im Sinne der vorliegenden Erfindung sind C.I. Pigment Yellow 1 (C.I. No. 11 680), C.I. Pigment Yellow 5 (C.I. No. 11 660), C.I. Pigment Yellow 74 (C.I. No. 11 741), C.I. Pigment Yellow 120 (C.I. No. 11 783), C.I. Pigment Yellow 151 (C.I. No. 13 980), C.I. Pigment Yellow 175 (C.I. 11 784), sowie C.I. Pigment Yellow 201 der Formel

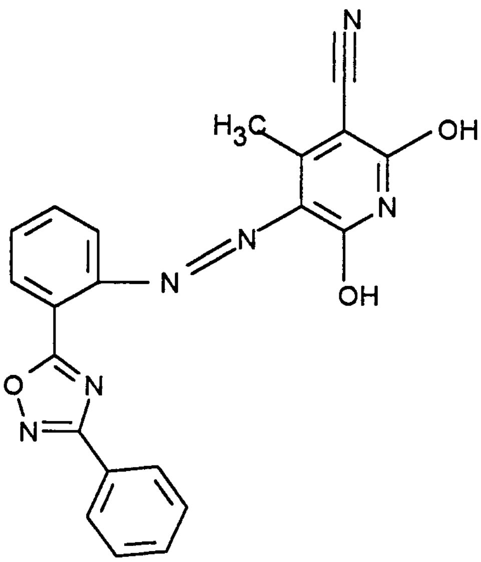

oder ein anderes Tautomer bezüglich des Pyridinrings,

C.I. Pigment Yellow 198 der Formel

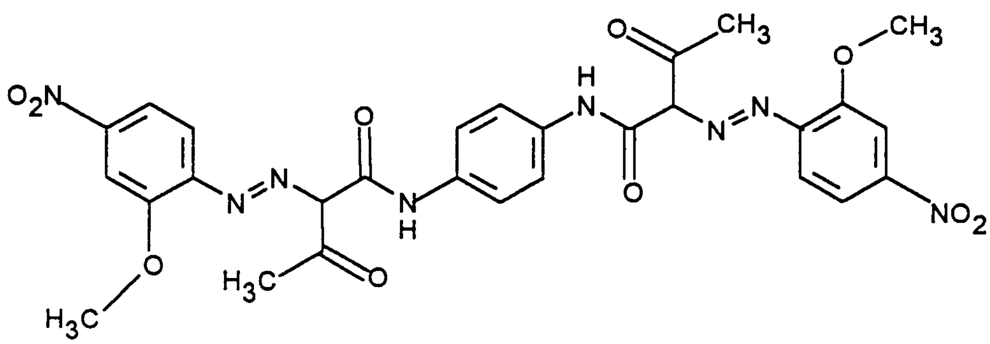

C.I. Pigment Yellow 194 der Formel

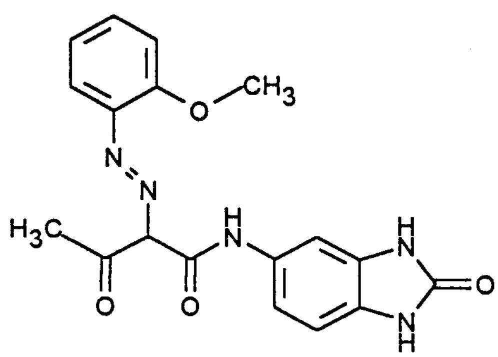

C.I. Pigment Yellow 185 der Formel

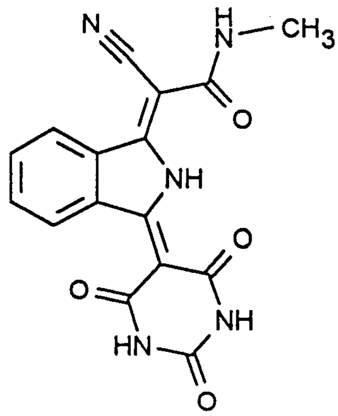

C.I. Pigment Yellow 181 der Formel

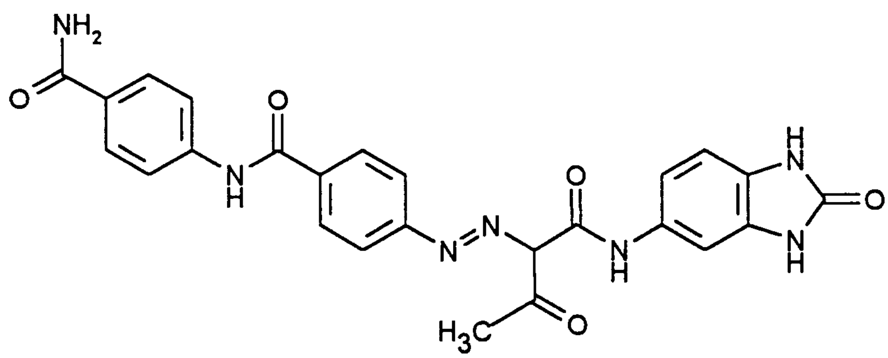

C.I. Pigment Yellow 180 der Formel

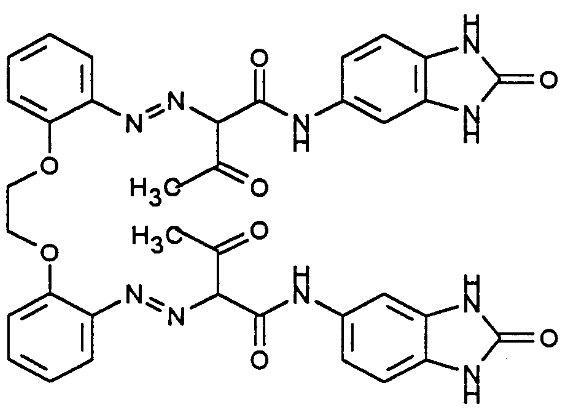

sowie das Pigment der Formel (IV)

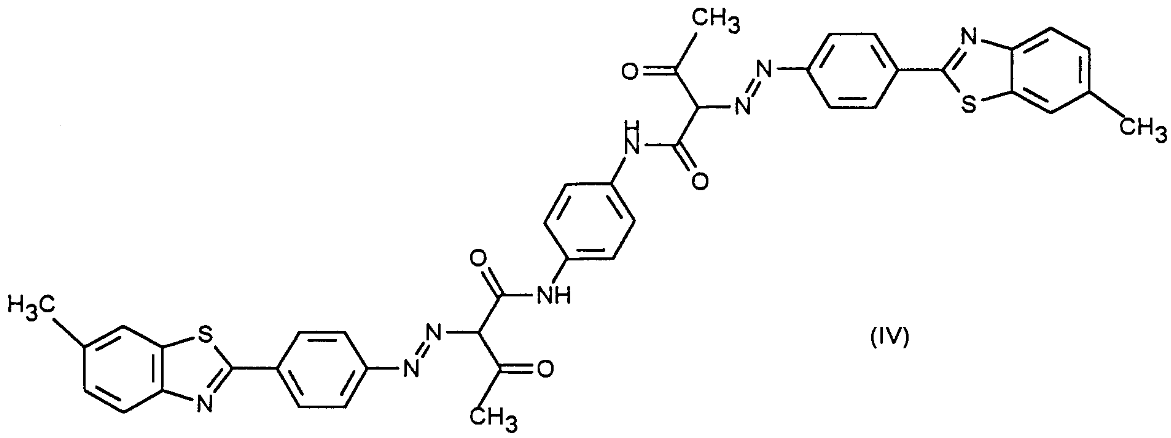

(IV)

Das Gewichtsverhältnis zwischen dem Pigment der Formel (I) und dem weiteren vorzugsweise chlorfreien organischen Gelbpigment kann in weiten Grenzen schwanken, beispielsweise zwischen 10:90 und 90:10, bevorzugt zwischen 60:40 und 40:60.

Eine erfindungsgemäße Illustrationstiefdruckfarbe (100 Gew.-%) besteht vorzugsweise aus 5 bis 35 Gew.-%, insbesondere aus 5 bis 20 Gew.-%, Gesamtpigmentanteil. Das Gewichtsverhältnis von Pigment: Bindemittel kann zwischen 1:1 und 1:4, von Pigment: Lösemittel zwischen 1:1 und 1:5 liegen.

Übliche Additive und Hilfsmittel können 0 bis 5 Gew.-% der Druckfarbe ausmachen.

Als organisches Lösemittel kommen insbesondere Toluol, oder Gemische von Toluol und flüssigen Kohlenwaserstoffen in Betracht.

Als Bindemittel kommen Natur- oder Kunstharze, wie Phenolharz, handelsübliche (auch modifizierte) Kolophoniumharze, z.B. disproportioniertes oder hydriertes Kolophoniumharz, handelsübliche Metallresinate (z.B. Ca, Mg, Zn) und Kohlenwasserstoffharze in Betracht.

Weitere übliche Additive und Hilfsmittel können z.B. Wachse oder Azo-Farbstoffe (Gelb) sein.

Die erfindungsgemäßen Illustrationstiefdruckfarben können hergestellt werden, indem man die genannten Komponenten in beliebiger Reihenfolge zusammengibt und durch eine geeignete Maßnahme, z.B. mittels Dissolver, Dispergiergerät (Paint-Shaker) oder Perlmühle dispergiert. Sollen Pigmente, die in Granulatform erhältlich sind, verwendet werden, so müssen diese durch geeignete Maßnahmen vor oder während der Druckfarbenherstellung zerkleinert werden. Um zu verhindern, daß sich Pigmentteilchen am Boden festsetzen, ist es zweckmäßig, das Pigment in das vorgelegte Firnis-Lösemittel-Gemisch unter Rühren einzudosieren.

Eine druckfertige Illustrationstiefdruckfarbe kann hergestellt werden, indem man von Anfang an die Mengenverhältnisse der Komponenten so wählt, daß sich die gewünschte Auslaufzeit in einen 3 mm Auslaufbecher (ISO 2431) auf Druckviskosität (25 s bis 35 s) einstellt, oder indem man zunächst ein Druckfarbenkonzentrat herstellt (Pigmentgehalt meist größer oder gleich 15 Gew.-%) und dieses vor dem Verdrucken mit dem organischen Lösemittel entsprechend verdünnt.

Die erfindungsgemäßen Illustrationstiefdruckfarben zeichnen sich durch besonders gute rheologische und coloristische Eigenschaften, sowie durch gute Lager- und Flockungsstabilität aus.

Beispiele

Herstellung der Druckfarbenkonzentrate:

Firnis, Toluol und Pigment werden in dieser Reihenfolge in einen Dispergierbehälter eingefüllt und mit einem Glasstab umgerührt, so daß eine klumpenfreie homogene Suspension entsteht. Es werden 113 g Dispergierglaskugeln (Durchmesser 1 mm) zugegeben, umgerührt, der Dispergierbehälter verschlossen und kurz mit der Hand geschüttelt. Anschließend wird der gefüllte Dispergierbehälter auf einer Schüttelmaschine (Paint Shaker) 20 Minuten lang bei etwa 20°C geschüttelt. Die Dispergierkonzentrate werden anschließend über einem Sieb von den Glaskugeln getrennt.

Verdünnung der Druckfarbenkonzentrate auf gleiche Viskosität:

Die so hergestellten Druckfarbenkonzentrate werden durch Zugabe von Toluol auf eine Auslaufzeit von 30 ±

0,2 s in einem normierten Auslaufbecher (3 mm Düse), ISO 2431, eingestellt.

Herstellung der Andrucke:

Die Druckfarben gleicher Auslaufzeit werden mit einer Tiefdruck-Probedruckmaschine, Modell "Labratester", Fa. Norbert Schäfli-Engler Maschinen, Zofingen, Schweiz, auf Kunstdruckpapier APCO II/II, 150 g/m$^2$, Fa. Scheufelen, Oberlenningen angedruckt.

In den nachfolgenden Beispielen wird als Firnis jeweils ein modifiziertes Ca/Mg-Resinat eingesetzt. Der Firnis besteht jeweils aus 60 Gewichtsteilen dieses Harzes und 40 Gewichtsteilen Toluol.

Die Herstellung der Druckfarbe aus den Druckfarbenkonzentraten erfolgt wie vorstehend beschrieben.

Beispiel 1 (Vergleichsbeispiel)

| | |
|---|---|
| 77,5 g | Firnis |
| 50,0 g | Toluol |
| 22,5 g | C.I. Pigment Yellow 74 (C.I. No. 11 741) |
| 150,0 g | Druckfarbenkonzentrat (15 %ig an Pigment) |

Die Druckfarbe ist stark geflockt, so daß kein Verdrucken möglich ist.

Beispiel 2 (Vergleichsbeispiel)

| | |
|---|---|
| 77,5 g | Firnis |
| 50,0 g | Toluol |
| 22,5 g | C.I. Pigment Yellow 139 |
| 150,0 g | Druckfarbenkonzentrat (15 %ig an Pigment) |

Die Druckfarbe hat nur eine geringe Toluolverdünnbarkeit von 8 g Toluol pro 100 g Farbkonzentrat.

Beispiel 3

| | |
|---|---|
| 77,5 g | Firnis |
| 50,0 g | Toluol |
| 22,5 g | Pigment · (90 Gewichtsteile C.I. Pigment Yellow 74 + 10 Gewichtsteile C.I. Pigment Yellow 139) |
| 150,0 g | Druckfarbenkonzentrat (15 %ig an Pigment) |

Die Druckfarbe, die auf eine Auslaufzeit von 30,0 s ± 0,2 s (3 mm Auslaufbecher) eingestellt wurde, ist nicht geflockt und weist eine Toluolverdünnbarkeit von 100 g Toluol pro 100 g Farbkonzentrat auf.

Beispiel 4

| | |
|---|---|
| 77,5 g | Firnis |
| 50,0 g | Toluol |
| 22,5 g | Pigment (50 Gewichtsteile C.I. Pigment Yellow 74 + 50 Gewichtsteile C.I. Pigment Yellow 139) |
| 150,0 g | Druckfarbenkonzentrat (15 %ig an Pigment) |

Die Druckfarbe ist nicht geflockt und weist im Vergleich zu der in Beispiel 3 hergestellten eine niedrigere

Toluolverdünnbarkeit von 62 g Toluol pro 100 g Farbkonzentrat auf. Die Verdruckbarkeit ist gut.

Beispiel 5 (Vergleichsbeispiel)

| | |
|---|---|
| 77,5 g | Firnis |
| 50,0 g | Toluol |
| 22,5 g | Pigment der vorstehend erwähnten Formel (IV) |
| 150,0 g | Druckfarbenkonzentrat (15 % Pigmentgehalt) |

Die Druckfarbe ist geflockt, so daß kein Verdrucken möglich ist.

Beispiel 6

| | |
|---|---|
| 77,5 g | Firnis |
| 50,0 g | Toluol |
| 22,5 g | Pigment (90 Gewichtsteile Pigment der Formel (IV) + 10 Gewichtsteile C.I. Pigment Yellow 139) |
| 150,0 g | Druckfarbenkonzentrat (15 % Pigmentgehalt) |

Die Druckfarbe ist nicht geflockt und verdruckbar.

Beispiel 7

| | |
|---|---|
| 77,5 g | Firnis |
| 50,0 g | Toluol |
| 22,5 g | Pigment (50 Gewichtsteile Pigment der Formel (IV) 50 Gewichtsteile C.I. Pigment Yellow 139) |
| 150,0 g | Druckfarbenkonzentrat (15 % Pigmentgehalt) |

Die Druckfarbe ist nicht geflockt und weist eine Toluolverdünnbarkeit von 55 g Toluol/100 g Farbe auf. Die Verdruckbarkeit ist gut.

**Patentansprüche**

1. Illustrationstiefdruckfarbe, gekennzeichnet durch einen Gehalt an C.I. Pigment Yellow 139 der Formel (I)

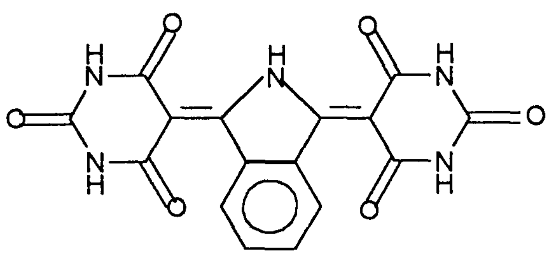

(I)

und einem oder mehreren organischen Gelbpigmenten.

2. Illustrationstiefdruckfarbe nach Anspruch 1, dadurch gekennzeichnet, daß das oder die organischen Gelbpigmente chlorfrei sind.

3. Illustrationstiefdruckfarbe nach Anspruch 1 oder 2, dadurch gekennzeichnet, daß das organische Gelbpigment ein Monoazo-, Disazo- oder Isoindolin-Pigment ist.

4. Illustrationstiefdruckfarbe nach mindestens einem der Ansprüche 1 bis 3, dadurch gekennzeichnet, daß das organische Gelbpigment ein Pigment der Formel (II)

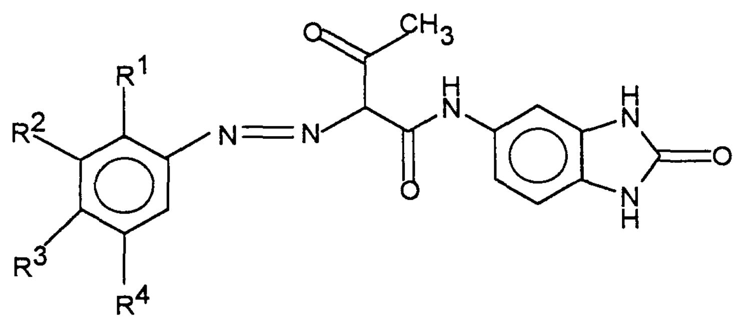

(II)

worin

$R^1$ Wasserstoff, $CF_3$, $OCH_3$, COOH oder $COO(C_1\text{-}C_4)$alkyl;
$R^2$ Wasserstoff oder $COO(C_1\text{-}C_4)$alkyl;
$R^3$ Wasserstoff oder Nitro und
$R^4$ Wasserstoff oder $COO(C_1\text{-}C_4)$alkyl bedeuten, ist.

5. Illustrationstiefdruckfarbe nach mindestens einem der Ansprüche 1 bis 3, dadurch gekennzeichnet, daß das organische Gelbpigment ein Pigment der Formel (III)

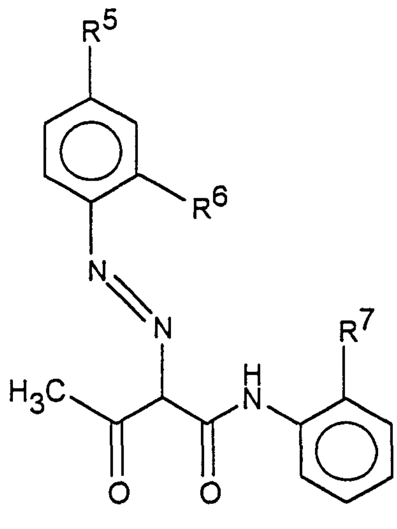

(III)

worin

$R^5$ Wasserstoff, Methyl oder Nitro;
$R^6$ Nitro, Methyl oder Methoxy; und
$R^7$ Wasserstoff oder Methoxy bedeuten, ist.

6. Illustrationstiefdruckfarbe nach mindestens einem der Ansprüche 1 bis 3, dadurch gekennzeichnet, daß das organische Gelbpigment C.I. Pigment Yellow (C.I. No. 11 680), C.I. Pigment Yellow 5 (C.I. No. 11 660), C.I. Pigment Yellow 74 (C.I. No. 11 741), C.I. Pigment Yellow 120 (C.I. No. 11 783), C.I. Pigment Yellow 151 (C.I. No. 13 980), C.I. Pigment Yellow175 (C.I. No. 11 784), C.I. Pigment Yellow 201 der Formel

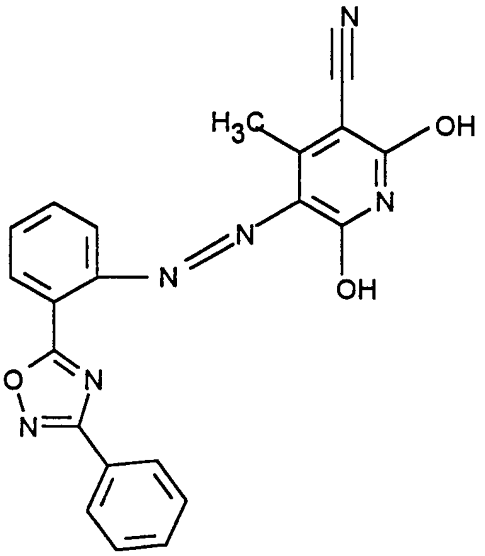

oder ein anderes Tautomer bezüglich des Pyridinrings,

C.I. Pigment Yellow 198 der Formel

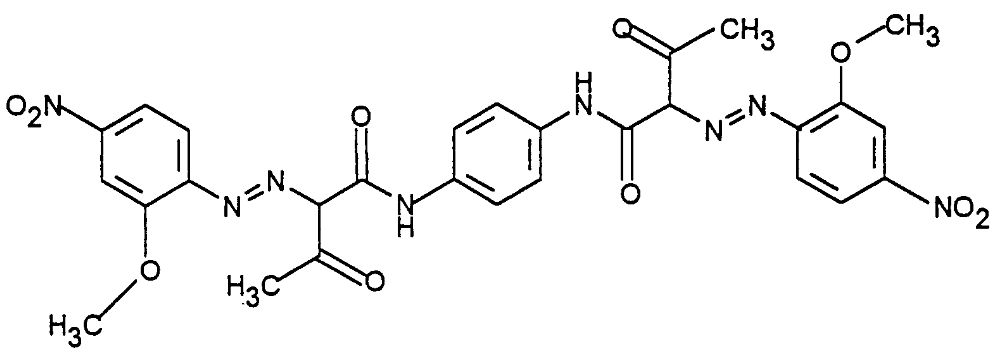

C.I. Pigment Yellow 194 der Formel

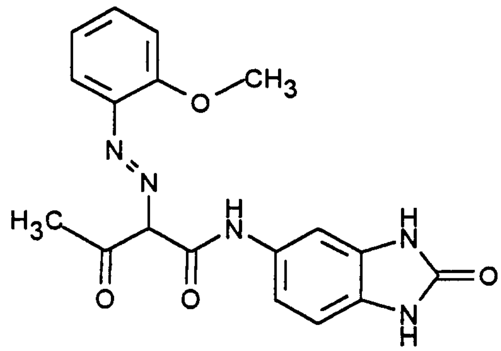

C.I. Pigment Yellow 185 der Formel

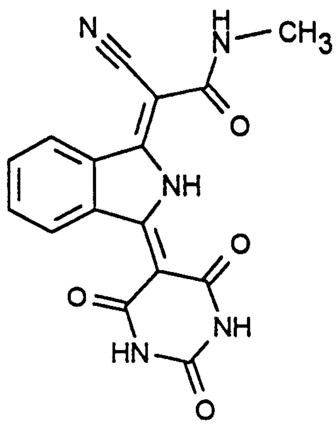

C.I. Pigment Yellow 181 der Formel

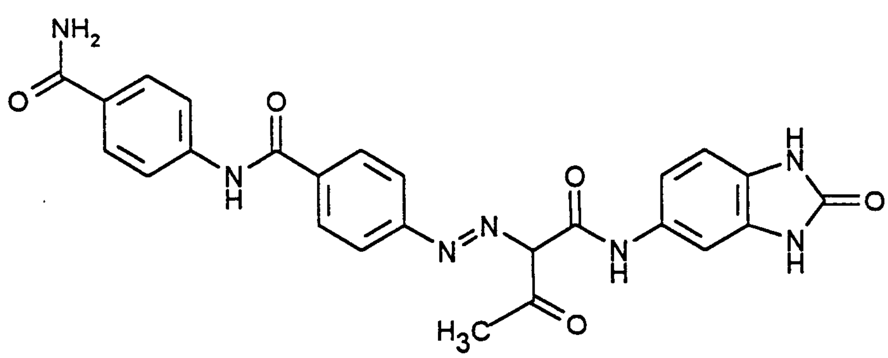

C.I. Pigment Yellow 180 der Formel

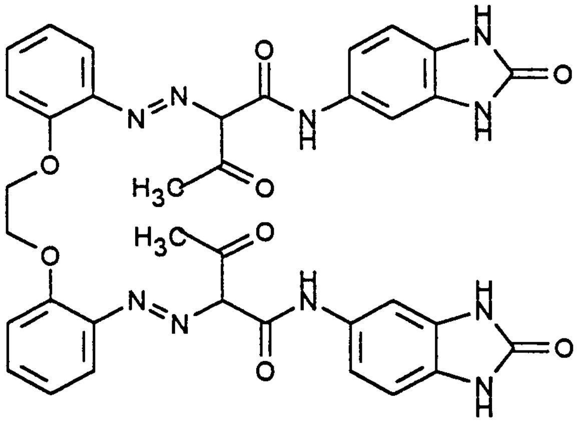

oder das Pigment der Formel (IV)

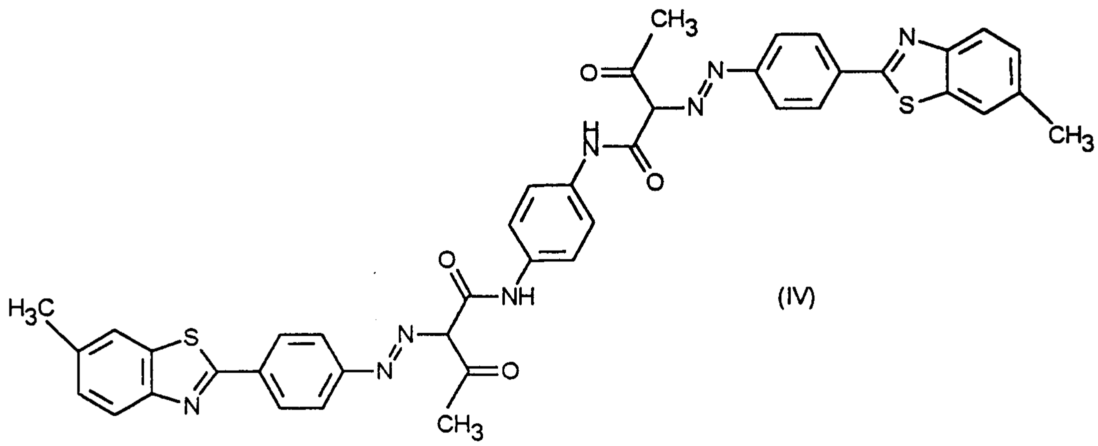

(IV)

ist.

**7.** Illustrationstiefdruckfarbe nach mindestens einem der Ansprüche 1 bis 6, dadurch gekennzeichnet, daß das Gewichtsverhältnis zwischen dem Pigment der Formel (I) und dem organischen Gelbpigment zwischen 10:90 und 90:10 liegt.

**8.** Illustrationstiefdruckfarbe nach mindestens einem der Ansprüche 1 bis 7, bestehend im wesentlichen aus 5 bis 35 Gew.-%, vorzugsweise 5 bis 20 Gew.-%, Gesamtpigmentanteil, einem üblichen Bindemittel und einem organischen Lösemittel.

**9.** Illustrationstiefdruckfarbe nach Anspruch 8, dadurch gekennzeichnet, daß das Gewichtsverhältnis Pigment: Bindemittel zwischen 1:1 und 1:4 und das Gewichtsverhältnis Pigment: Lösemittel zwischen 1:1 und 1:5 liegt.

**10.** Illustrationstiefdruckfarbe nach Anspruch 8 oder 9, dadurch gekennzeichnet, daß das organische Lösemittel Toluol oder ein Gemisch von Toluol und flüssigen Kohlenwasserstoffen ist.

**11.** Verfahren zur Herstellung einer Illustrationstiefdruckfarbe nach mindestens einem der Ansprüche 1 bis 10, dadurch gekennzeichnet, daß man die Pigmente, einen Druckfarbenfirnis und das organische Lösemittel zusammengibt, dispergiert und gegebenenfalls das entstandene Druckfarbenkonzentrat mit weiterem organischem Lösemittel bis zu einer verdruckbaren Illustrationstiefdruckfarbe verdünnt.

**Claims**

1. An intaglio ink for printing illustrations, comprising C.I. Pigment Yellow 139 of the formula (I)

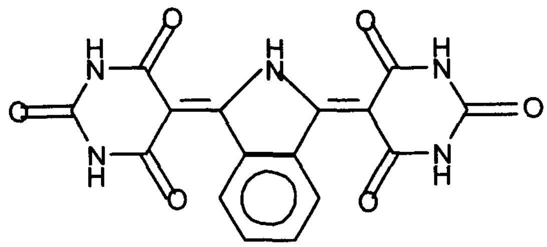

(I)

and one or more organic yellow pigments.

2. The ink as claimed in claim 1, wherein the organic yellow pigment or pigments is or are chlorine-free.

3. The ink as claimed in claim 1 or 2, wherein the organic yellow pigment is a monoazo, disazo or isoindoline pigment.

4. The ink as claimed in at least one of claims 1 to 3, wherein the organic yellow pigment is a pigment of the formula (II)

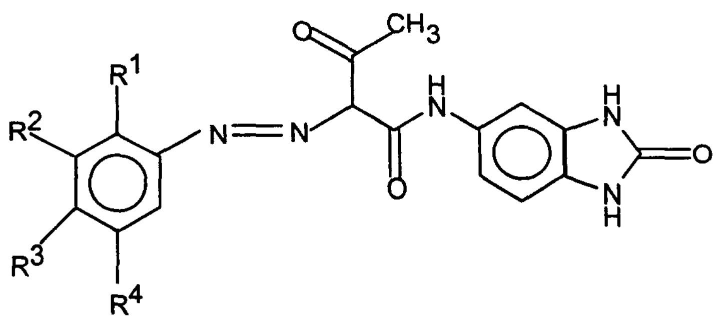

(II)

in which

$R^1$ is hydrogen, $CF_3$, $OCH_3$, COOH or COO($C_1$-$C_4$)alkyl;
$R^2$ is hydrogen or COO($C_1$-$C_4$)alkyl;
$R^3$ is hydrogen or nitro and
$R^4$ is hydrogen or COO($C_1$-$C_4$)alkyl.

5. The ink as claimed in at least one of claims 1 to 3, wherein the organic yellow pigment is a pigment of the formula (III)

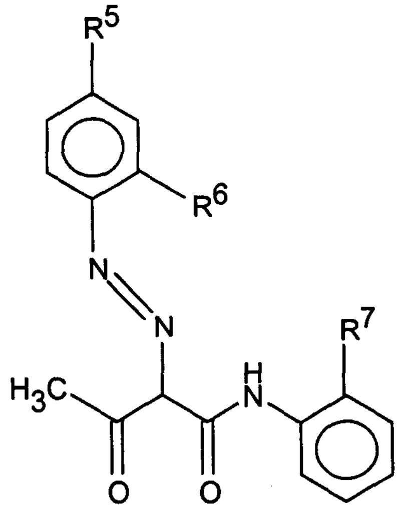

(III)

in which

$R^5$ is hydrogen, methyl or nitro;
$R^6$ is nitro, methyl or methoxy; and
$R^7$ is hydrogen or methoxy.

**6.** The ink as claimed in at least one of claims 1 to 3, wherein the organic yellow pigment is C.I. Pigment Yellow 1 (C.I. No. 11 680), C.I. Pigment Yellow 5 (C.I. No. 11 660), C.I. Pigment Yellow 74 (C.I. No. 11 741), C.I. Pigment Yellow 120 (C.I. No. 11 783), C.I. Pigment Yellow 151 (C.I. No. 13 980), C.I. Pigment Yellow 175 (C.I. No. 11 784), C.I. Pigment Yellow 201 of the formula

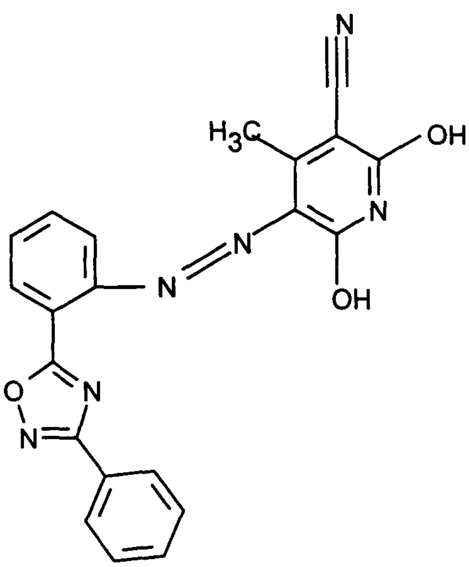

or another tautomer with respect to the pyridine ring,

C.I. Pigment Yellow 198 of the formula

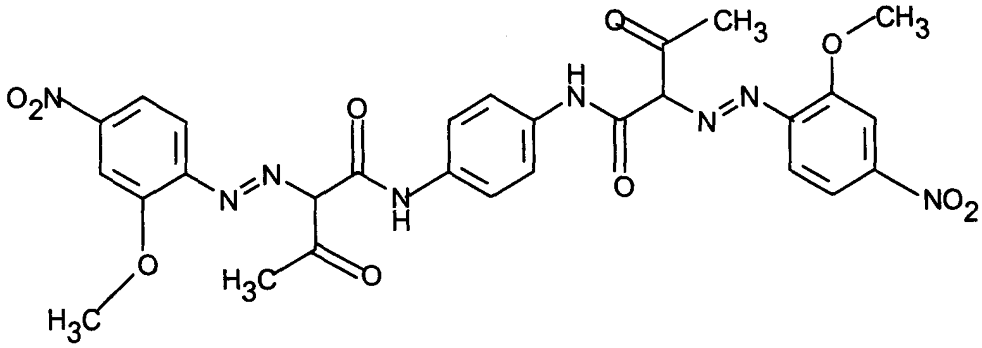

C.I. Pigment Yellow 194 of the formula

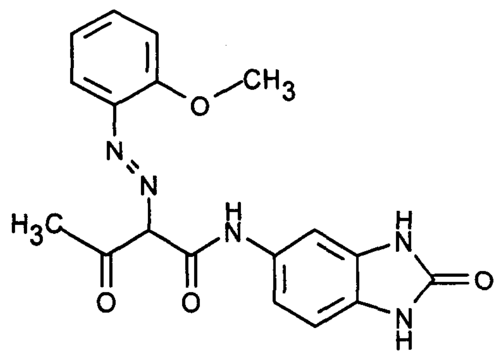

C.I. Pigment Yellow 185 of the formula

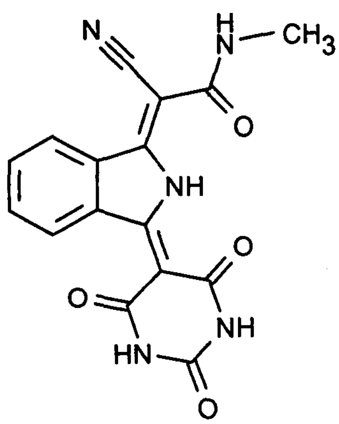

C.I. Pigment Yellow 181 of the formula

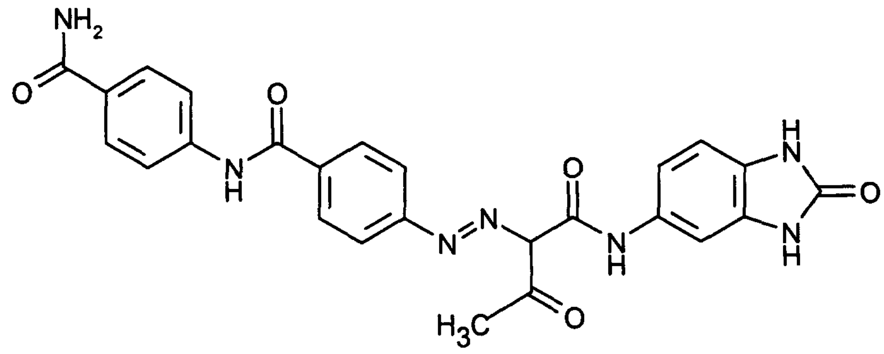

C.I. Pigment Yellow 180 of the formula

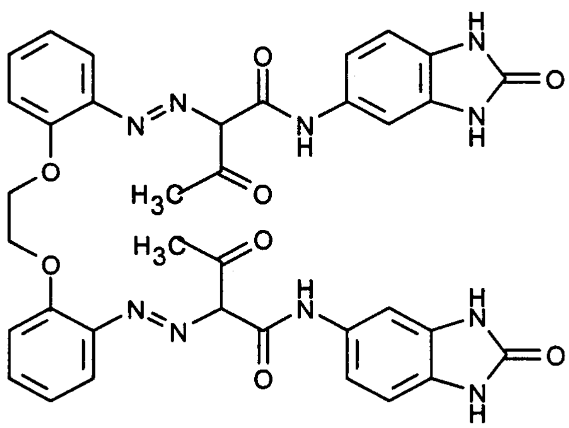

or the pigment of the formula (IV)

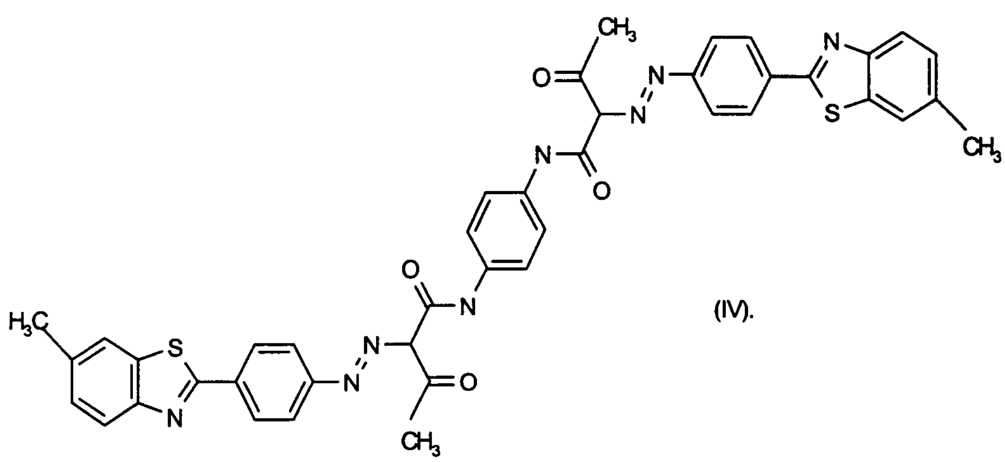

(IV).

**7.** The ink as claimed in at least one of claims 1 to 6, wherein the weight ratio between the pigment of the formula (I) and the organic yellow pigment is between 10:90 and 90:10.

**8.** The ink as claimed in at least one of claims 1 to 7, consisting essentially of from 5 to 35% by weight, preferably from 5 to 20% by weight, of total pigment, a customary binder and an organic solvent.

**9.** The ink as claimed in claim 8, wherein the weight ratio of pigment to binder is between 1:1 and 1:4 and the weight ratio of pigment to solvent is between 1:1 and 1:5.

**10.** The ink as claimed in claim 8 or 9, wherein the organic solvent is toluene or a mixture of toluene and liquid hydrocarbons.

**11.** A process for preparing an ink as claimed in at least one of claims 1 to 10, which comprises combining the pigments, a printing ink varnish and the organic solvent, dispersing the combination and, if desired, diluting the resulting printing ink concentrate with further organic solvent to give a printable intaglio ink for the printing of illustrations.

**Revendications**

**1.** Encre hélio pour illustration caractérisée par une teneur en C. I. Pigent Yellow 139 de formule (I)

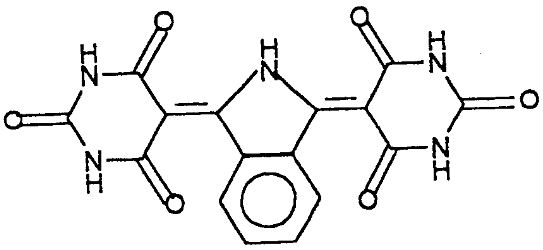

(I)

et en un ou plusieurs pigments jaunes organiques.

**2.** Encre hélio pour illustration selon la revendication 1, caractérisée en ce que le ou les pigments jaunes organiques sont exempts de chlore.

**3.** Encre hélio pour illustration selon la revendication 1 ou 2, caractérisée en ce que le pigment jaune organique est un pigment monoazoïque, disazoïque ou d'isoindoline.

**4.** Encre hélio pour illustration selon l'une des revendications 1 à 3, caractérisée en ce que le pigment jaune organique est un pigment de formule (II)

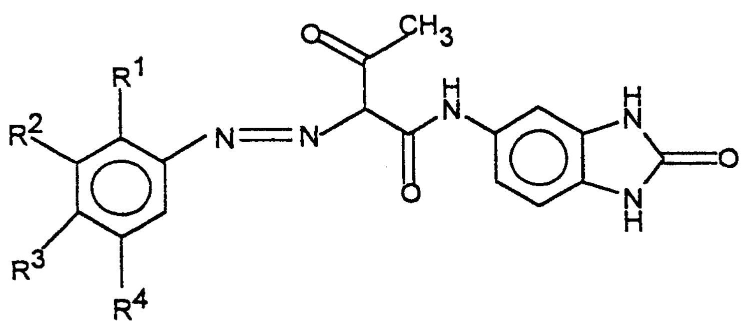

(II)

où

$R^1$ représente un atome d'hydrogène, des groupes $CF_3$, $OCH_3$, COOH ou COO-alkyle en $C_1$-$C_4$ ;
$R^2$ représente un atome d'hydrogène ou un groupe COO-alkyle en $C_1$-$C_4$ ;
$R^3$ représente un atome d'hydrogène ou un groupe nitro et
$R^4$ représente un atome d'hydrogène ou un groupe COO-alkyle en $C_1$-$C_4$ ;

**5.** Encre hélio pour illustration selon l'une des revendications 1 à 3, caractérisée en ce que le pigment jaune organique est un pigment de formule (III)

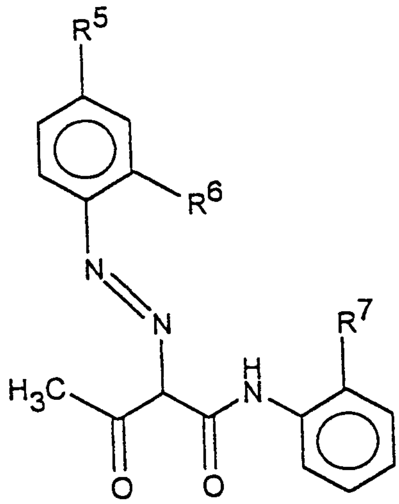

(III)

où

- $R^5$ représente un atome d'hydrogène, des groupes méthyle ou nitro ;
- $R^6$ représente des groupes nitro, méthyle ou méthoxy ; et
- $R^7$ représente un atome d'hydrogène ou un groupe méthoxy.

**6.** Encre hélio pour illustration selon l'une des revendications 1 à 3, caractérisée en ce que le pigment jaune organique est le C. I. Pigment Yellow 1 (C. I. N° 11 680), le C. I. Pigment Yellow 5 (C. I. N° 11 660), le C. I. Pigment Yellow 74 (C. I. N° 11 741), le C. I. Pigment Yellow 120 (C. I. N° 11 783), le C. I. Pigment Yellow 151 (C. I. N° 13 980), le C. I. Pigment Yellow 175 (C. I. N° 11 784), ainsi que le C. I. Pigment Yellow 201 de formule

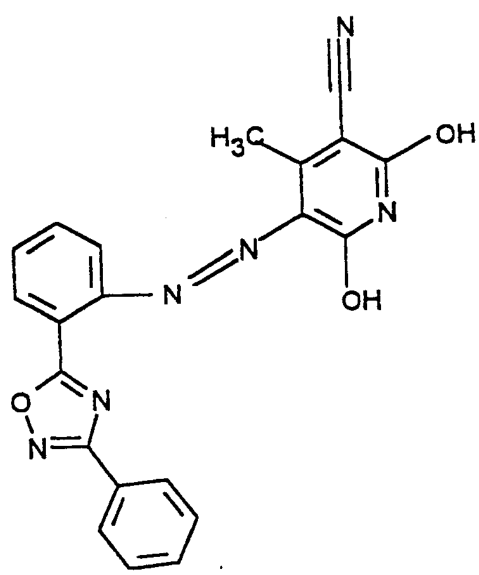

ou un autre tautomère concernant le cycle pyridine,

C. I. Pigment Yellow 198 de formule

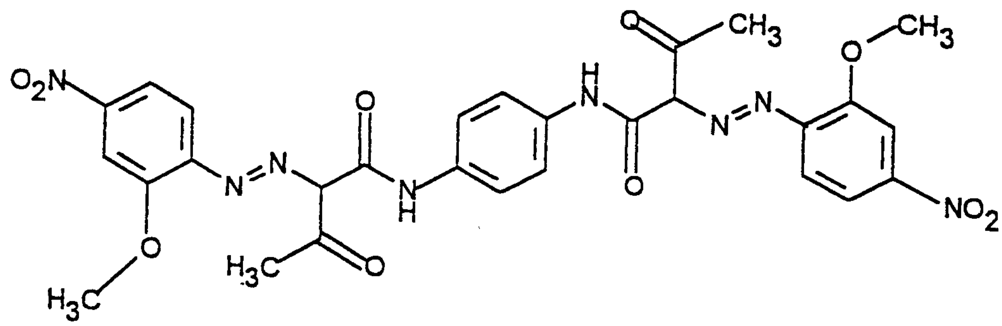

C. I. Pigment Yellow 194 de formule

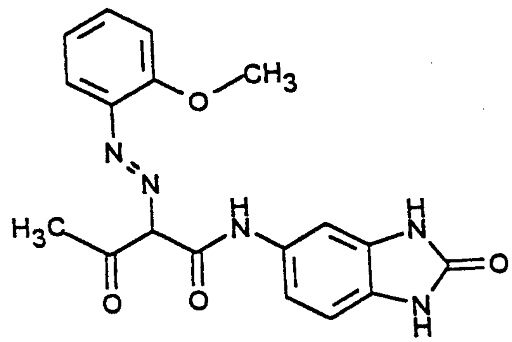

C. I. Pigment Yellow 185 de formule

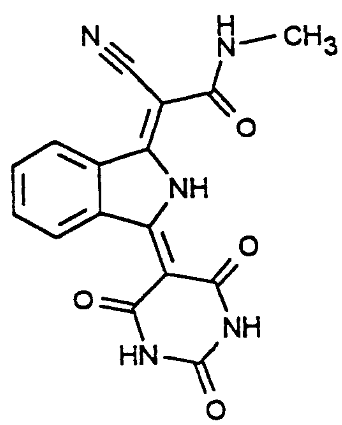

C. I. Pigment Yellow 181 de formule

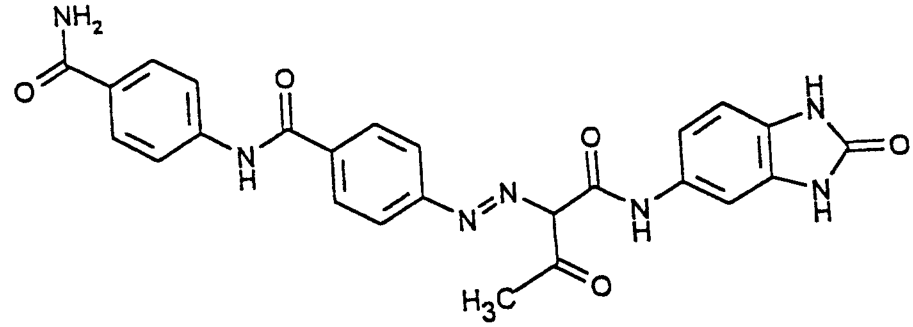

C. I. Pigment Yellow 180 de formule

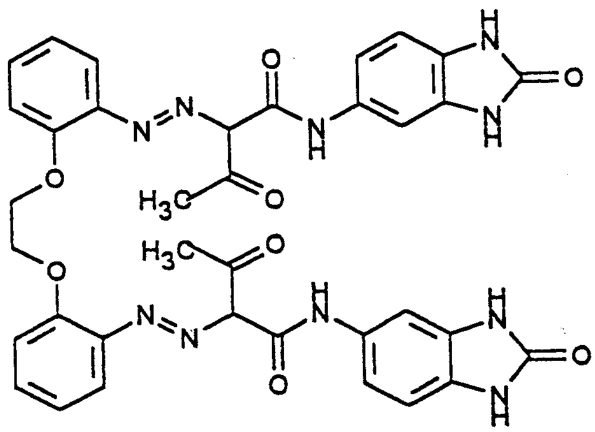

ainsi que le pigment de formule (IV)

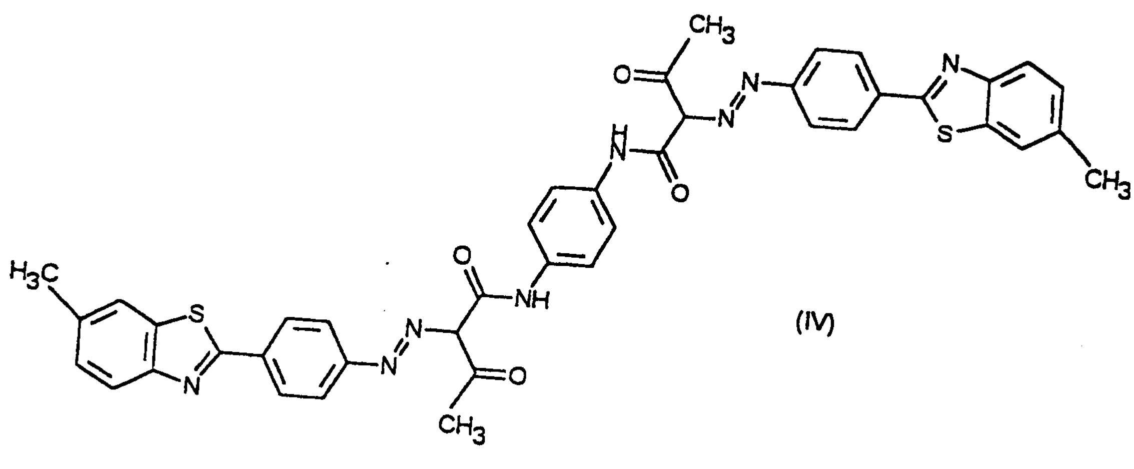

(IV)

7. Encre hélio pour illustration selon l'une des revendications 1 à 6, caractérisée en ce que le rapport pondéral du pigment de formule (I) au pigment jaune organique est compris entre 10:90 et 90:10.

8. Encre hélio pour illustration selon l'une des revendications 1 à 7, constituée essentiellement par un taux de 5 à 35% massiques, de préférence de 5 à 20% massiques, de pigment total, par un liant usuel et un solvant organique.

**9.** Encre hélio pour illustration selon la revendication 8, caractérisée en ce que le rapport pondéral pigment:liant est compris entre 1:1 et 1;4 et le rapport pondéral pigment:solvant est compris entre 1:1 et 1:5.

**10.** Encre hélio pour illustration selon la revendication 8 ou 9, caractérisée en ce que le solvant organique est le toluène ou un mélange de toluène et d'hydrocarbures liquides.

**11.** Procédé de préparation d'une encre hélio pour illustration selon au moins l'une des revendications 1 à 10, caractérisée en ce qu'on réunit les pigments, un vernis pour encres d'imprimerie et le solvant organique, on disperse et éventuellement on dilue le concentré d'encre d'imprimerie obtenu avec une autre quantité de solvant jusqu'à l'obtention d'une encre hélio pour illustration apte au roulage.